# EUROPÄISCHE PATENTSCHRIFT

(11) **EP 3 865 262 B1**
(45) Veröffentlichungstag und Bekanntmachung des Hinweises auf die Patenterteilung: **03.04.2024**
(21) Anmeldenummer: 20157369.8
(22) Anmeldetag: 14.02.2020
(51) Int. Cl.: B27B 17/00, B25F 5/00, A01G 3/06, A01G 3/08

(54) **HANDGEFÜHRTES BEARBEITUNGSGERÄT MIT MOTORGEHÄUSE**
HAND-HELD OPERATING DEVICE WITH MOTOR HOUSING
OUTIL DE TRAVAIL MANUEL AVEC BOÎTIER MOTEUR

(43) Veröffentlichungstag der Anmeldung: 18.08.2021
(73) Patentinhaber: Andreas Stihl AG & Co. KG, 71336 Waiblingen (DE)
(72) Erfinder: HEINZELMANN, Georg, 71364 Winnenden (DE); FAILENSCHMID, Martin, 70329 Stuttgart (DE)
(74) Vertreter: Patentanwälte Ruff, Wilhelm, Beier, Dauster & Partner mbB

(56) Entgegenhaltungen:
- EP-A1- 2 668 840
- EP-A1- 3 012 068
- DE-A1-102010 030 077
- US-A1- 2019 111 582
- US-B2- 9 744 685

## Beschreibung

Die Erfindung bezieht sich auf ein handgeführtes Bearbeitungsgerät nach dem Oberbegriff des Anspruchs 1.

Demgemäß beinhaltet das Bearbeitungsgerät ein Motorgehäuse, das einen Gehäusegrundkörper, der sich mindestens an einer ersten Gehäuseseite erstreckt, und einen mit dem Gehäusegrundkörper verbundenen Gehäuserestkörper umfasst, der zusammen mit dem Gehäusegrundkörper einen Gehäuseinnenraum umschließt, und einen am Gehäusegrundkörper gehaltenen Antriebsmotor im Gehäuseinnenraum, wobei der Gehäusegrundkörper eine Werkzeughalteeinrichtung zur Halterung eines vom Antriebsmotor angetriebenen Werkzeugs aufweist. Der Gehäusegrundkörper ist vorzugsweise einteilig gebildet, alternativ ist er aus mehreren Teilen zusammengesetzt. Der Gehäuserestkörper vervollständigt als restlicher Gehäusekörper, daher die Bezeichnung als Gehäuserestkörper, den Gehäusegrundkörper zur Bildung des Motorgehäuses. Auch er kann vorzugsweise einteilig oder alternativ mehrteilig gebildet sein.

Mit dem Umschließen des Gehäuseinnenraums durch den Gehäuserestkörper zusammen mit dem Gehäusegrundkörper ist vorliegend gemeint, dass der Gehäuserestkörper zusammen mit dem Gehäusegrundkörper zumindest in einer zur ersten Gehäuseseite senkrechten Ebene einen Gehäuseringschluss bildet, so dass das Motorgehäuse eine zumindest in dieser Ebene geschlossene Einhausung für den Antriebsmotor und etwaige weitere darin untergebrachte Gerätekomponenten bildet. Dabei ergänzen sich der Gehäusegrundkörper und der Gehäuserestkörper zu diesem Ringschluss, d.h. weder der Gehäusegrundkörper noch der Gehäuserestkörper bilden jeweils allein diesen Ringschluss.

Derartige Bearbeitungsgeräte sind beispielsweise in den Bereichen der Garten- und Forsttechnik sowie der Bau- und Heimwerkertechnik in unterschiedlichen Ausführungen für unterschiedliche Bearbeitungszwecke gebräuchlich, z.B. als Motorsäge, Heckenschere oder Trennschleifer.

Es sind Bearbeitungsgeräte dieser Art in Form von Motorsägen, insbesondere vom Typ mit elektrischem Antriebsmotor bekannt, bei denen sich der Gehäusegrundkörper plattenförmig nur an der ersten Gehäuseseite erstreckt und eine z.B. aus einem Metallmaterial bestehende Halteplatte bildet, an der innenseitig der Antriebsmotor und außenseitig eine Führungsschiene zum umlaufend rotationsbeweglichen Halten einer Sägekette als Bearbeitungswerkzeug montiert werden. Der Gehäuserestkörper kann in diesem Fall hauben- bzw. topfförmig gebildet und auf den Gehäusegrundkörper aufsetzbar sein, so dass er den Gehäuseinnenraum an allen übrigen Gehäuseseiten umgibt.

Die Offenlegungsschrift DE 10 2013 212 637 A1 offenbart eine elektrische Motorsäge dieser Art, bei welcher der Gehäusegrundkörper und zwecks guter Wärmeübertragung auch der Gehäuserestkörper aus einem Metallmaterial gebildet sind und der Antriebsmotor auf einer Seite am Gehäusegrundkörper und auf einer gegenüberliegenden Seite am Gehäuserestkörper gehalten ist.

Ähnlich offenbart die Patentschrift US 9.744.685 B2 eine elektrische Motorsäge dieser Art, die als Antriebsmotor einen bürstenlosen Gleichstrommotor aufweist und bei welcher der Gehäusegrundkörper und der Gehäuserestkörper zwecks guter Wärmeabführung vom Antriebsmotor beide aus einem Leichtmetallmaterial, insbesondere einem Aluminium- oder Magnesiummaterial, gebildet sind.

Der Erfindung liegt als technisches Problem die Bereitstellung eines handgeführten Bearbeitungsgeräts der eingangs genannten Art zugrunde, das sich gegenüber dem oben erwähnten Stand der Technik insbesondere hinsichtlich einer andersartigen Realisierung des Motorgehäuses auszeichnet.

Die Erfindung löst dieses Problem durch die Bereitstellung eines handgeführten Bearbeitungsgeräts mit den Merkmalen des Anspruchs 1. Bei diesem Bearbeitungsgerät bildet der Gehäusegrundkörper eine steife Motor- und Werkzeugtragstruktur, die sich mindestens an der ersten Gehäuseseite und an einer angrenzenden zweiten Gehäuseseite unter Bildung einer L-Form erstreckt, wobei der Gehäuserestkörper eine nicht-steife Gehäusereststruktur bildet. Dabei kann die steife Motor- und Werkzeugtragstruktur einteilig oder aus mehreren miteinander verbundenen Teilen gebildet sein. Je nach Bedarf erstreckt sich die steife Motor- und Werkzeugtragstruktur nur an der ersten und zweiten Gehäuseseite jeweils bis zu einem Gehäuseckbereich, an der die erste und die zweite Gehäuseseite zusammentreffen, unter Bildung einer reinen, bloßen L-Form oder alternativ zusätzlich an einer dritten Gehäuseseite unter Bildung einer zu einer Art U-Form erweiterten L-Form oder weiter alternativ an der ersten und zweiten Gehäuseseite nicht beidseits nur bis zum betreffenden Gehäuseckbereich, sondern an einer Seite über den Gehäuseckbereich hinaus oder anders ausgedrückt etwas nach innen versetzt unter Bildung einer zu einer Art T-Form erweiterten L-Form.

Unter der Charakterisierung, dass der Gehäusegrundkörper eine steife Motor- und Werkzeugtragstruktur und der Gehäuserestkörper eine nicht-steife Gehäusereststruktur bilden, ist vorliegend zu verstehen, dass der Gehäusegrundkörper eine steifere Struktur als der Gehäuserestkörper bildet und dazu insbesondere aus einem Material gebildet ist, das einen höheren Elastizitätsmodul aufweist als das davon verschieden gewählte Material des Gehäuserestkörpers. Insbesondere besitzt der Gehäusegrundkörper eine Steifigkeit, die groß genug ist, den Antriebsmotor und das Bearbeitungswerkzeug daran mit ausreichender Stabilität halten zu können. Der Gehäuserestkörper ist auf eine demgegenüber geringere und vorzugsweise wesentlich geringere Steifigkeit ausgelegt, was vorteilhaft dazu genutzt werden kann, das Gewicht und den Materialbedarf für das Bearbeitungsgerät gering zu halten und/oder dessen Falleigenschaften zu verbessern, indem der Gehäuserestkörper Stoßenergie aufnehmen kann, wenn das Gerät versehentlich auf den Boden fällt. Zur Steifigkeit der Motor- und Werkzeugtragstruktur trägt zudem bei, dass sich die Struktur mindestens an zwei aneinandergrenzenden Gehäuseseiten unter Bildung der L-Form erstreckt. Damit lässt sich die Steifigkeit der Struktur gegenüber einer rein plattenförmigen Struktur auch dann erhöhen, wenn das gleiche Material wie für die plattenförmige Struktur verwendet wird. Zudem erhöht sich dadurch auch die Steifigkeit des dreidimensional, d.h. räumlich, und nicht nur in einer Ebene mit dem Gehäusegrundkörper verbundenen Gehäuserestkörpers.

In einer Weiterbildung der Erfindung unterscheiden sich der Gehäuserestkörper und der Gehäusegrundkörper in ihrem Elastizitätsmodul um mindestens den Faktor zwei, insbesondere um mindestens den Faktor zehn. Dies hat eine entsprechend höhere Steifigkeit des Gehäusegrundkörpers im Vergleich zu derjenigen des Gehäuserestkörpers zur Folge.

In einer Weiterbildung der Erfindung bilden die erste Gehäuseseite eine Gehäuselängsseite und die zweite Gehäuseseite eine Gehäusequerseite, und die steife Motor- und Werkzeugtragstruktur des Gehäusegrundkörpers erstreckt sich an der ersten Gehäuseseite und an der zweiten Gehäuseseite jeweils über mehr als die halbe Abstandslänge zwischen einer Gerätevorderseite und einer Geräterückseite. Damit wird die vergleichsweise hohe Steifigkeit des Gehäusegrundkörpers für die betreffende Gehäuselängsseite und die betreffende Gehäusequerseite jeweils entlang der überwiegender Länge zwischen Vorder- und Rückseite des Gerätes bereitgestellt, wodurch das Motorgehäuse insgesamt eine entsprechend hohe Steifigkeit besitzen kann und eine hohe Stabilität für die Befestigung des Antriebsmotors und des Bearbeitungswerkzeugs erzielt werden kann. Als Gerätevorderseite ist hierbei in der Regel eine zur Gehäusequerseite parallele vordere Geräteseite zu verstehen, an der sich das Bearbeitungswerkzeug befindet bzw. über die ein Bearbeitungswerkzeugteil nach vorn hinaus vorsteht. Entsprechend ist als Geräterückseite die der Gerätevorderseite abgewandte Geräteseite zu verstehen, an der sich z.B. ein Akkuschacht befinden kann bzw. von der ein Akkuschacht nach hinten abstehen kann oder an der sich ein hinterer Handgriff befinden kann oder von der ein hinterer Handgriff nach hinten abstehen kann.

In einer Ausgestaltung der Erfindung erstreckt sich die steife Motor- und Werkzeugtragstruktur des Gehäusegrundkörpers an der ersten Gehäuseseite von einer Gerätevorderseite bis zu einer Geräterückseite. Dies trägt weitergehend zu einer hohen Steifigkeit des Motorgehäuses und einer hohen Stabilität für die Halterung von Antriebsmotor und Bearbeitungswerkzeug bei, wobei das Gewicht des Bearbeitungsgerätes durch entsprechend leichte Ausführung des Gehäuserestkörpers dennoch in einer gewünschten Weise gering gehalten werden kann. In alternativen Ausführungen erstreckt sich steife Motor- und Werkzeugtragstruktur zwar über mehr als die halbe, jedoch weniger als die gesamte Länge an der ersten Gehäuseseite.

In einer weiteren Ausgestaltung der Erfindung erstreckt sich die steife Motor- und Werkzeugtragstruktur des Gehäusegrundkörpers unter Bildung einer U-Form zusätzlich an einer an die erste Gehäuseseite angrenzenden dritten Gehäuseseite. In diesem Fall ist die L-Form der Motor- und Werkzeugtragstruktur um eine weitere Strukturseite, d.h. einen weiteren U-Schenkel, zur U-Form erweitert, was vorteilhaft zu einer erhöhten Steifigkeit der vom Gehäusegrundkörper bereitgestellten Motor- und Werkzeugtragstruktur beitragen kann. Je nach Bedarf lassen sich an dieser dritten Seite der steifen Motor- und Werkzeugtragstruktur zusätzliche Gerätekomponenten entsprechend stabil anbringen bzw. halten. In alternativen Ausführungen erstreckt sich die steife Motor- und Werkzeugtragstruktur nur an der ersten und der zweiten Gehäuseseite.

In einer Weiterbildung der Erfindung weist die steife Motor- und Werkzeugtragstruktur des Gehäusegrundkörpers an der ersten Gehäuseseite außenseitig die Werkzeughalteeinrichtung und innenseitig eine Motorhalteeinrichtung zur Halterung des Antriebsmotors auf.

In einer Weiterbildung der Erfindung erstreckt sich die steife Motor- und Werkzeugtragstruktur des Gehäusegrundkörpers an der ersten Gehäuseseite plattenförmig und an der zweiten Gehäuseseite unter Bildung einer Hohlkörperstruktur. Die Hohlkörperstruktur kann weitergehend zu einer hohen Steifigkeit der Motor- und Werkzeugtragstruktur des Gehäusegrundkörpers beitragen.

In einer Ausgestaltung der Erfindung bildet die Hohlkörperstruktur einen Flüssigkeitsbehälter. Damit lässt sich die Hohlkörperstruktur des Gehäusegrundkörpers vorteilhaft zur Bereitstellung des Flüssigkeitsbehälters nutzen. In alternativen Ausführungen kann die Hohlkörperstruktur z.B. von einem offenen Hohlprofil gebildet sein.

In einer Weiterbildung der Erfindung sind der Gehäusegrundkörper aus einem Metallmaterial und der Gehäuserestkörper aus einem Kunststoffmaterial gebildet. Die stellt eine für viele Anwendungen optimale Wahl der Materialien für den Gehäusegrundkörper einerseits und den Gehäuserestkörper andererseits dar. Alternativ können beide Gehäuseteile z.B. aus einem Metallmaterial oder einem Kunststoffmaterial gebildet sein.

In einer Weiterbildung der Erfindung ist das Bearbeitungsgerät als eine Motorsäge oder als ein Trennschleifer oder als eine Heckenschere konfiguriert. Dies stellt vorteilhafte Realisierungen für das Bearbeitungsgerät dar, bei denen die steife Motor- und Werkzeugtragstruktur gut mit einer Ausführung des Gehäuserestkörpers mit niedrigem Gewicht kombiniert werden kann, um für das Gesamtgerät eine optimale Stabilität bei niedrigem Gewicht bereitzustellen, was dem Benutzer die Handhabung des Bearbeitungsgeräts erleichtert.

Vorteilhafte Ausführungsformen sind in den Zeichnungen dargestellt. Diese und weitere vorteilhafte Ausführungsformen der Erfindung werden nachfolgend näher beschrieben. Hierbei zeigen:
- Fig. 1: eine aufgeschnittene Perspektivansicht eines vorliegend interessierenden Teils eines als Motorsäge vom Tophandle-Typ ausgeführten Bearbeitungsgeräts,
- Fig. 2: eine Perspektivansicht eines Teils eines Gehäuserestkörpers eines Motorgehäuses der Motorsäge von Fig. 1,
- Fig. 3: eine Seitenansicht eines Gehäusegrundkörpers des Motorgehäuses,
- Fig. 4: eine Perspektivansicht des Gehäusegrundkörpers,
- Fig. 5: eine perspektivische Explosionsansicht eines gehäusebezogenen Teils der Motorsäge,
- Fig. 6: eine Ansicht entsprechend Fig. 1 für eine Ausführungsvariante des Bearbeitungsgeräts als Motorsäge vom Rearhandle-Typ,
- Fig. 7: eine Perspektivansicht eines Gehäusegrundkörpers eines Motorgehäuses der Motorsäge von Fig. 6 und
- Fig. 8: eine Seitenansicht entsprechend Fig. 3 für die Ausführungsvariante von Fig. 6.

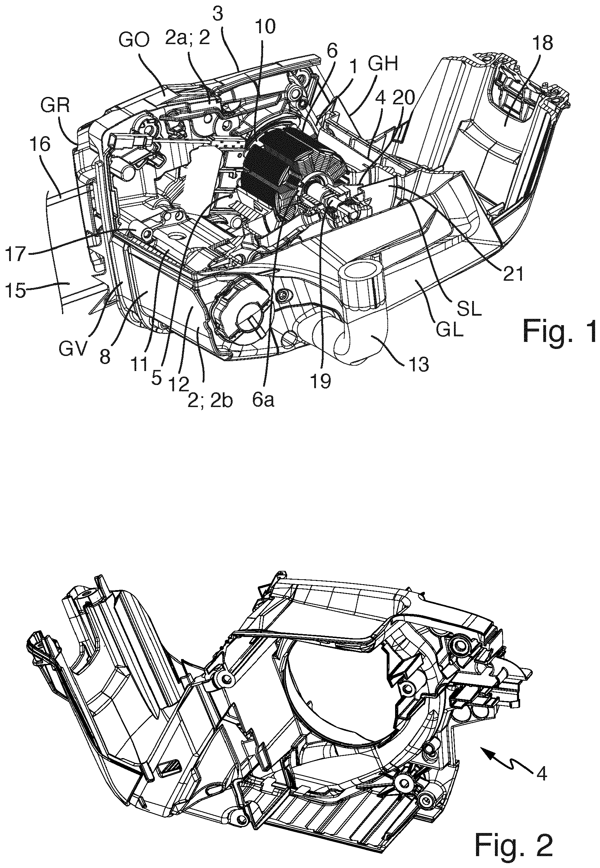

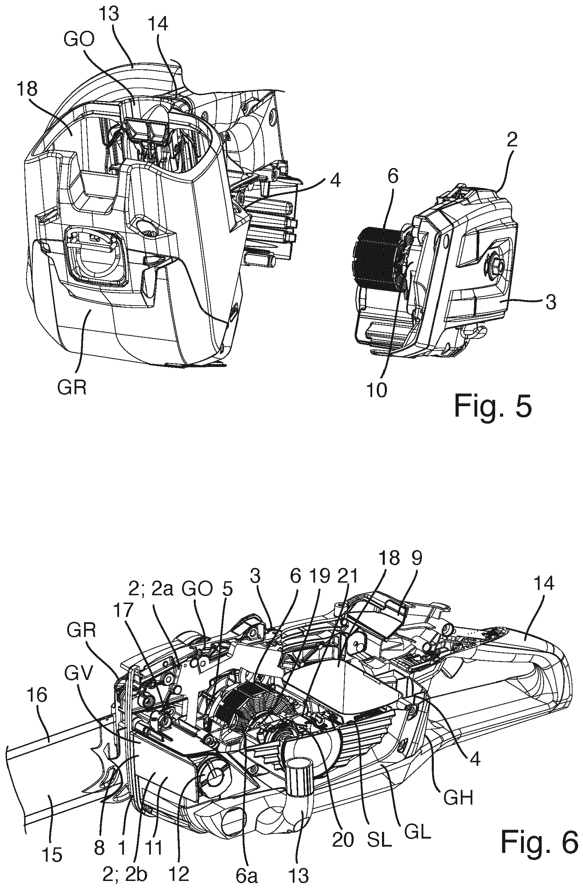

In den Figuren sind exemplarische Ausführungen des erfindungsgemäßen handgeführten Bearbeitungsgeräts in Form von Motorsägen des sogenannten Tophandle-Typs bzw. Rearhandle-Typs dargestellt. Beide Motorsägentypen besitzen einen in den Fig. 1 und 6 teilweise zu erkennenden Hilfsgriff 13 und einen Hauptgriff 14, der sich beim Tophandle-Typ an einer Geräteoberseite GO befindet, wie in Fig. 5 zu erkennen, beim Rearhandle-Typ an einer Geräterückseite GH, wie aus Fig. 6 ersichtlich. Dies geht von einer Orientierung aus, bei sich der ein zugehöriger Bearbeitungswerkzeugteil, in diesem Fall eine Führungsschiene 15 und eine als Bearbeitungswerkzeug 16 fungierende, um die Führungsschiene 15 umlaufend antreibbare Sägekette, von einer Gerätevorderseite GV nach vorn erstreckt.

Wie anhand der gezeigten Ausführungsbeispiele deutlich wird, beinhaltet das Bearbeitungsgerät ein Motorgehäuse 1, das einen Gehäusegrundkörper 2 und einen mit diesem verbundenen Gehäuserestkörper 4, d.h. restlichen Gehäusekörper, umfasst. Der Gehäusegrundkörper 2 erstreckt sich mindestens an einer ersten Gehäuseseite 3, die sich bei den gezeigten Beispielen auf einer rechten Geräteseite GR befindet, wie aus den Fig. 1 und 6 ersichtlich.

Zusammen mit dem Gehäusegrundkörper 2 umschließt der Gehäuserestkörper 4 einen Gehäuseinnenraum 5, in dem ein Antriebsmotor 6 untergebracht ist, der am Gehäusegrundkörper 2 gehalten ist. Das Umschließen bedeutet hierbei, dass der Gehäuserestkörper 4 zusammen mit dem Gehäusegrundkörper 2 den Gehäuseinnenraum 5 zumindest in einer zu der ersten Gehäuseseite 3 senkrechten Ebene unter Bildung eines Ringschlusses vollständig umgibt. Ein solcher Ringschluss ist beispielsweise in Fig. 1 in der Schnittebene senkrecht zur ersten Gehäuseseite zu erkennen, wobei in dieser Ebene der Gehäuserestkörper 4 geschnitten gezeigt ist, so dass der Ringschluss entlang einer zugehörig gezeigten Schnittlinie SL gut zu erkennen ist. In diesem Beispiel ist diese Ringschlussebene folglich in der normalen Gebrauchslage der Motorsäge, in welcher die Führungsschiene 15 in einer Vertikalebene liegt, eine Horizontalebene. Je nach Bedarf und Anwendungsfall kann auch in der zu dieser Ringschlussebene und zur ersten Gehäuseseite 3 senkrechten Ebene ein solcher Ringschluss durch den Gehäusegrundkörper 2 und den Gehäuserestkörper 4 um den Gehäuseinnenraum 5 herum vorgesehen sein.

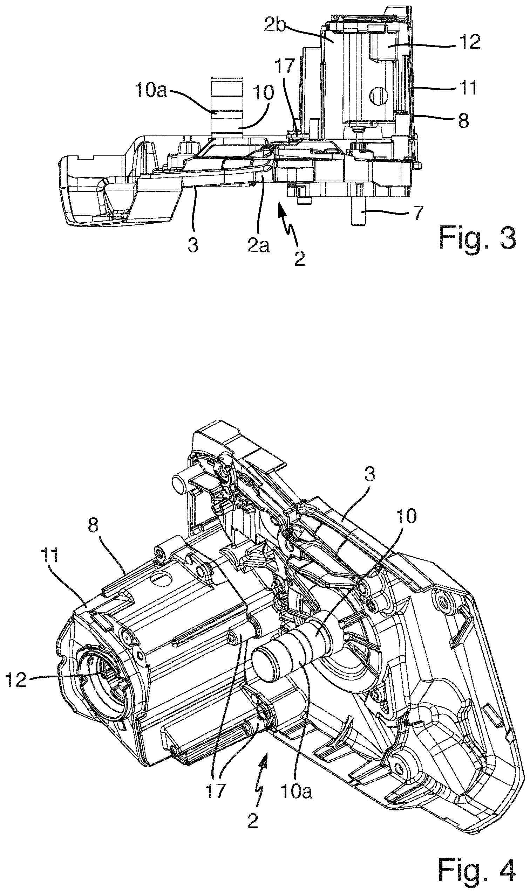

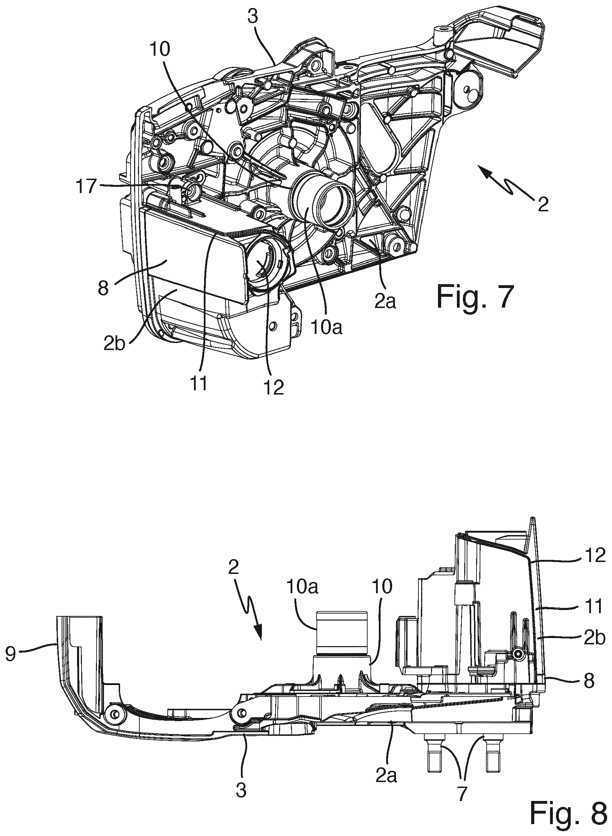

Der Gehäusegrundkörper 2 weist eine in den Ansichten der Fig. 3 und 8 erkennbare Werkzeughalteeinrichtung 7 zur Halterung des Bearbeitungswerkzeugs 16 auf, in diesem Fall speziell eine Halteeinrichtung, mit der die Führungsschiene 15 und mit dieser die an ihr umlaufend angeordnete Sägekette in üblicher Weise gehalten werden können.

Der Gehäusegrundkörper 2 bildet eine steife Motor- und Werkzeugtragstruktur, die sich mindestens an der ersten Gehäuseseite 3 und an einer angrenzenden zweiten Gehäuseseite 8 unter Bildung einer L-Form erstreckt. Die L-Form der steifen Motor- und Werkzeugtragstruktur entlang der ersten und der zweiten Gehäuseseite 3, 8 ist beispielsweise aus den Seitenansichten der Fig. 3 und 8 deutlich zu erkennen. In den gezeigten Beispielen liegt die zweite Gehäuseseite 8 an der Gerätevorderseite GV.

Der Gehäuserestkörper 4 bildet eine nicht-steife Gehäusereststruktur, d.h. er ist weniger steif ausgeführt als der Gehäusegrundkörper 2, insbesondere indem er aus einem Material mit gegenüber demjenigen des Gehäusegrundkörpers 2 geringerem Elastizitätsmodul besteht. In entsprechenden Ausführungen unterscheiden sich der Gehäuserestkörper 3 und der Gehäusegrundkörper 2 in ihrem Elastizitätsmodul um mindestens den Faktor zwei, vorzugsweise um einen deutlich höheren Faktor, z.B.um mindestens den Faktor zehn oder mindestens den Faktor zwanzig. Dies ist insbesondere durch die Wahl entsprechend unterschiedlicher Materialien für den Gehäusegrundkörper 2 einerseits und den Gehäuserestkörper 3 andererseits realisierbar, insbesondere auch bei den gezeigten Ausführungsbeispielen.

Der Gehäusegrundkörper 2 kann einteilig oder mehrteilig gebildet sein. In den gezeigten Beispielen ist er mehrteilig gebildet und beinhaltet einen ersten Teil 2a, der sich zumindest an der ersten Gehäuseseite 3 erstreckt, und einen mit diesem starr verbundenen zweiten Teil 2b, der sich im Wesentlichen an der zweiten Gehäuseseite 2 erstreckt und mit dem ersten Teil in einer herkömmlichen Weise lösbar oder unlösbar verbunden ist. In den gezeigten Beispielen ist hierzu eine lösbare Verbindung mittels Schraubverbindungen 17 vorgesehen.

Der Gehäuserestkörper 4 ist ebenfalls je nach Bedarf einteilig oder mehrteilig ausgeführt. In entsprechenden Ausführungen bildet er eine haubenartige Einfassung, deren Haubeninnenraum den Gehäuseinnenraum 5 bildet, in dem der Antriebsmotor 6 untergebracht ist und der an einer oder mehreren offenen Seiten vom Gehäusegrundkörper 2 geschlossen wird.

Das vom Gehäusegrundkörper 2 und dem Gehäuserestkörper 4 gebildete Motorgehäuse 1 kann je nach Bedarf so ausgeführt sein, dass es nur den Antriebsmotor 6 und dessen periphere Komponenten einhaust oder gleichzeitig ein Gerätegehäuse bildet, in welchem noch weitere Gerätekomponenten des Bearbeitungsgeräts untergebracht sind, z.B. ein Lüftergebläse 20 für den Antriebsmotor 6, und/oder eine Akkumulatorbatterie, die den Antriebsmotor 6 speist, wenn dieser wie in den gezeigten Ausführungsbeispielen ein elektrischer Antriebsmotor und kein Verbrennungsmotor ist. Fig. 2 zeigt speziell einen Hauptteil des Gehäuserestkörpers 4, der durch einen oder mehrere weitere Gehäuseteile zum gesamten Gehäuserestkörper 4 ergänzt werden kann. So bildet in den gezeigten Beispielen der Gehäuserestkörper 4 zusammen mit dem Gehäusegrundkörper 2 ein Gerätegehäuse mit einem Akkuschacht 18 zum Aufnehmen der Akkumulatorbatterie. Außerdem besitzt der Gehäuserestkörper 4 in den gezeigten Beispielen einen Gehäuseteil 21 für das Lüftergebläse 20. Der Gehäuserestkörper 4 kann neben den in den Figuren gezeigten Gehäuseteilen weitere Gehäuseteile beinhalten, z.B. ein als Gerätehaubenteil fungierendes Gehäuseteil und/oder ein oder mehrere Außengehäuseteile zur außenseitigen Geräteabdeckung.

In entsprechenden Ausführungen bilden, wie bei den gezeigten Ausführungsbeispielen, die erste Gehäuseseite 3 eine Gehäuselängsseite, in den gezeigten Ausführungsbeispielen an der rechten Geräteseite GR, und die zweite Gehäuseseite 8 eine Gehäusequerseite, in den gezeigten Ausführungsbeispielen an der Gerätevorderseite GV. Dabei erstreckt sich die steife Motor- und Werkzeugtragstruktur des Gehäusegrundkörpers 2 in den gezeigten Ausführungsbeispielen an der ersten Gehäuseseite 3 und an der zweiten Gehäuseseite 8 jeweils über mehr als der halben Länge zwischen der Gerätevorderseite GV und der Geräterückseite GH. Vorzugsweise erstreckt sich der Gehäusegrundkörper 2, wie in den gezeigten Beispielen, über im Wesentlichen die ganze Länge zwischen der Gerätevorderseite GV und der Geräterückseite GH. Des Weiteren erstreckt sich der Gehäusegrundkörper 2 in den gezeigten Beispielen auch über annähernd die gesamte Länge der zweiten Gehäuseseite 8. Mit dieser Gestaltung stellt der Gehäusegrundkörper 2 eine sehr stabile L-förmige, steife Struktur für das Gerät insgesamt bereit.

In entsprechenden Ausführungen erstreckt sich die steife Motor- und Werkzeugtragstruktur des Gehäusegrundkörpers 2 unter Bildung einer U-Form zusätzlich an einer an die erste Gehäuseseite 3 angrenzenden dritten Gehäuseseite 9, wie dies im Ausführungsbeispiel der Fig. 6 bis 8 realisiert ist. In dieser gezeigten Ausführung liegt die dritte Gehäuseseite 9 an der Geräterückseite GH, wie aus Fig. 6 ersichtlich. Aus der Seitenansicht von Fig. 8 ist gut die U-Form der steifen Motor- und Werkzeugtragstruktur des Gehäusegrundkörpers 2 in dieser Realisierung zu erkennen. Dabei bildet die Erstreckung des Gehäusegrundkörpers 2 entlang der ersten Gehäuseseite 3 den Mittelsteg der U-Form, während die Erstreckung des Gehäusegrundkörpers 2 an der zweiten Gehäuseseite 8 und der dritten Gehäuseseite 9 die beiden U-Schenkel bildet.

Im gezeigten Beispiel erstreckt sich die steife Motor- und Werkzeugtragstruktur des Gehäusegrundkörpers 2 an der dritten Gehäuseseite 9 nicht über deren gesamte Länge, sondern nur etwa entlang einem Drittel bis etwa der Hälfte der Länge der dritten Gehäuseseite 9. Über die restliche Länge erstreckt sich der Gehäuserestkörper 4, der sich im Übrigen in beiden gezeigten Ausführungsbeispielen jeweils über die gesamte Länge derjenigen Gehäuseseite erstreckt, die der ersten Gehäuseseite 3 gegenüberliegt und daher auf einer rechten Geräteseite GR liegt, wie aus den Fig. 1 und 6 ersichtlich.

In entsprechenden Ausführungen beinhaltet die steife Motor- und Werkzeugtragstruktur des Gehäusegrundkörpers 2, wie in den gezeigten Ausführungsbeispielen, an der ersten Gehäuseseite 3 außenseitig die Werkzeughalteeinrichtung 7 und innenseitig eine Motorhalteeinrichtung 10 zur Halterung des Antriebsmotors 6. In den gezeigten Beispielen ist die Werkzeughalteeinrichtung 7 passend zur Ausführung des Bearbeitungsgeräts als Motorsäge dafür eingerichtet, die Führungsschiene 15 fest an der steifen Motor- und Werkzeugtragstruktur des Gehäusegrundkörpers 2 zu halten und das Bearbeitungswerkzeug 16, d.h. die Sägekette, über ein Kettenrad an eine Antriebswelle 19 des Antriebsmotors 6 anzukoppeln. Die Motorhalteeinrichtung 10 beinhaltet in den gezeigten Beispielen einen hülsenförmigen Statorträger 10a bzw. Motorflansch, auf dem ein Stator 6a des Antriebsmotors 6 drehfest gehalten ist und durch den hindurch sich drehbeweglich die Antriebswelle 19 erstreckt.

In entsprechenden Ausführungen erstreckt sich die steife Motor- und Werkzeugtragstruktur des Gehäusegrundkörpers 2 an der ersten Gehäuseseite 3 plattenförmig und an der zweiten Gehäuseseite 8 unter Bildung einer Hohlkörperstruktur 11, wie dies in den gezeigten Beispielen der Fall ist. Für entsprechende Anwendungsfälle ist die Hohlkörperstruktur 11 derart realisiert, dass sie einen Flüssigkeitsbehälter 12 bildet. In den gezeigten Beispielen ist dies speziell zur Bildung eines Schmieröltanks als Flüssigkeitsbehälter 12 genutzt, in dem Schmieröl für das Bearbeitungswerkzeug 16 bevorratet werden kann.

In vorteilhaften Ausführungsformen sind der Gehäusegrundkörper 2 aus einem Metallmaterial und der Gehäuserestkörper 4 aus einem Kunststoffmaterial gebildet. Insbesondere kann diese Materialwahl auch bei den gezeigten Ausführungsbeispielen getroffen sein. Der Gehäusegrundkörper kann z.B. aus einem oder mehreren miteinander starr verbundenen Magnesiumdruckgussteilen bestehen, der Gehäuserestkörper kann z.B. aus einem faserverstärkten oder einem nicht faserverstärkten Kunststoffmaterial bestehen.

In den gezeigten Ausführungsbeispielen ist das Bearbeitungsgerät, wie gesagt, als Motorsäge ausgeführt, insbesondere als elektrische Motorsäge, d.h. mit einem Elektromotor als dem Antriebsmotor 6. In alternativen Ausführungen ist das Bearbeitungsgerät z.B. eine Motorsäge mit Verbrennungsmotor als Antriebsmotor oder eine Heckenschere oder ein anderes, in der Garten- und Forsttechnik verwendbares Gerät oder ein Trennschleifer oder ein anderes in der Bau- und Heimwerkertechnik verwendbares Gerät.

Wie die gezeigten und die weiteren oben erläuterten Ausführungsbeispiele deutlich machen, stellt die Erfindung ein vorteilhaftes handgeführtes Bearbeitungsgerät mit einem Motorgehäuse und einem darin aufgenommenen Antriebsmotor zur Verfügung, das sich mit vergleichsweise niedrigem Gerätegewicht und hoher Gehäusestabilität sowie optimaler Handhabbarkeit durch den Benutzer realisieren lässt. Dazu trägt insbesondere bei, dass der Gehäusegrundkörper eine steife Motor- und Werkzeugtragstruktur bildet, die sich mindestens an der ersten Gehäuseseite und an einer angrenzenden zweiten Gehäuseseite unter Bildung einer reinen L-Form oder einer zur U-Form erweiterten L-Form erstreckt und der Gehäuserestkörper eine nicht-steife Gehäusereststruktur bildet. Das Bearbeitungsgerät ist in entsprechenden Ausführungen für vielerlei Bearbeitungszwecke, insbesondere in den technischen Gebieten der Garten- und Forsttechnik sowie der Bau- und Heimwerkertechnik, verwendbar.

## Patentansprüche

1. Handgeführtes Bearbeitungsgerät, insbesondere Garten- oder Forstbearbeitungsgerät, mit
- einem Motorgehäuse (1), das einen Gehäusegrundkörper (2), der sich mindestens an einer ersten Gehäuseseite (3) erstreckt, und einen mit dem Gehäusegrundkörper (2) verbundenen Gehäuserestkörper (4) umfasst, der zusammen mit dem Gehäusegrundkörper (2) einen Gehäuseinnenraum (5) umschließt, und
- einem am Gehäusegrundkörper (2) gehaltenen Antriebsmotor (6) im Gehäuseinnenraum (5), wobei
- der Gehäusegrundkörper (2) eine Werkzeughalteeinrichtung (7) zur Halterung eines vom Antriebsmotor (6) angetriebenen Bearbeitungswerkzeugs aufweist,
- der Gehäusegrundkörper (2) eine steife Motor- und Werkzeugtragstruktur bildet, die sich mindestens an der ersten Gehäuseseite (3) und an einer angrenzenden zweiten Gehäuseseite (8) unter Bildung einer L-Form erstreckt, **dadurch gekennzeichnet, dass**
- der Gehäuserestkörper (4) eine nicht-steife Gehäusereststruktur bildet.

2. Handgeführtes Bearbeitungsgerät nach Anspruch 1, weiter **dadurch gekennzeichnet, dass** sich der Gehäuserestkörper (3) und der Gehäusegrundkörper (2) in ihrem Elastizitätsmodul um mindestens den Faktor zwei, insbesondere um mindestens den Faktor zehn, unterscheiden.

3. Handgeführtes Bearbeitungsgerät nach Anspruch 1 oder 2, wobei die erste Gehäuseseite (3) eine Gehäuselängsseite und die zweite Gehäuseseite (8) eine Gehäusequerseite bilden und sich die steife Motor- und Werkzeugtragstruktur des Gehäusegrundkörpers (2) an der ersten Gehäuseseite (3) und an der zweiten Gehäuseseite (8) jeweils über mehr als die halbe Abstandslänge zwischen einer Gerätevorderseite (GV) und einer Geräterückseite (GH) erstreckt.

4. Handgeführtes Bearbeitungsgerät nach Anspruch 3, weiter **dadurch gekennzeichnet, dass** sich die steife Motor- und Werkzeugtragstruktur des Gehäusegrundkörpers (2) an der ersten Gehäuseseite (3) von der Gerätevorderseite (GV) bis zu der Geräterückseite (GH) erstreckt.

5. Handgeführtes Bearbeitungsgerät nach Anspruch 4, weiter **dadurch gekennzeichnet, dass** sich die steife Motor- und Werkzeugtragstruktur des Gehäusegrundkörpers (2) unter Bildung einer U-Form zusätzlich an einer an die erste Gehäuseseite (3) angrenzenden dritten Gehäuseseite (9) erstreckt.

6. Handgeführtes Bearbeitungsgerät nach einem der Ansprüche 1 bis 5, weiter **dadurch gekennzeichnet, dass** die steife Motor- und Werkzeugtragstruktur des Gehäusegrundkörper (2) an der ersten Gehäuseseite (3) außenseitig die Werkzeughalteeinrichtung (7) und innenseitig eine Motorhalteeinrichtung (10) zur Halterung des Antriebsmotors (6) aufweist.

7. Handgeführtes Bearbeitungsgerät nach einem der Ansprüche 1 bis 6, weiter **dadurch gekennzeichnet, dass** sich die steife Motor- und Werkzeugtragstruktur des Gehäusegrundkörpers (2) an der ersten Gehäuseseite (3) plattenförmig und an der zweiten Gehäuseseite (8) unter Bildung einer Hohlkörperstruktur (11) erstreckt.

8. Handgeführtes Bearbeitungsgerät nach Anspruch 7, weiter **dadurch gekennzeichnet, dass** die Hohlkörperstruktur (11) einen Flüssigkeitsbehälter (12) bildet.

9. Handgeführtes Bearbeitungsgerät nach einem der Ansprüche 1 bis 8, weiter **dadurch gekennzeichnet, dass** der Gehäusegrundkörper (2) aus einem Metallmaterial und der Gehäuserestkörper (4) aus einem Kunststoffmaterial gebildet sind.

10. Handgeführtes Bearbeitungsgerät nach einem der Ansprüche 1 bis 9, weiter **dadurch gekennzeichnet, dass** es als eine Motorsäge oder als ein Trennschleifer oder als eine Heckenschere konfiguriert ist.

## Claims

1. Hand-guided treatment device, preferably a garden or forestry treatment device, comprising
- a motor housing (1), which comprises a basic housing body (2) that extends at least on a first housing side (3), and a remaining housing body (4), which is connected to the basic housing body (2) and, together with the basic housing body (2), encloses a housing interior (5), and
- a drive motor (6) in the housing interior (5), said motor being held on the basic housing body (2), wherein
- the basic housing body (2) comprises a tool-holding device (7) for holding a treatment tool driven by the drive motor (6),
- the basic housing body (2) forms a rigid motor- and tool-supporting structure which extends at least on the first housing side (3) and on an adjoining second housing side (8), forming an L shape,
**characterized in that**
- the remaining housing body (4) forms a non-rigid remaining housing structure.

2. Hand-guided treatment device according to Claim 1, further **characterized in that** the modulus of elasticity of the remaining housing body (4) and that of the basic housing body (2) differ by at least a factor of two, preferably by at least a factor of ten.

3. Hand-guided treatment device according to Claim 1 or 2, wherein the first housing side (3) forms a housing longitudinal side, and the second housing side (8) forms a housing transverse side, and, on the first housing side (3) and on the second housing side (8) respectively, the rigid motor- and tool-supporting structure of the basic housing body (2) extends over more than half the distance between a device front side (GV) and a device rear side (GH).

4. Hand-guided treatment device according to Claim 3, further **characterized in that**, on the first housing side (3), the rigid motor- and tool-supporting structure of the basic housing body (2) extends from the device front side (GV) to the device rear side (GH) .

5. Hand-guided treatment device according to Claim 4, further **characterized in that** the rigid motor- and tool-supporting structure of the basic housing body (2) additionally extends on a third housing side (9) adjoining the first housing side (3), forming a U shape.

6. Hand-guided treatment device according to any of Claims 1 to 5, further **characterized in that** the rigid motor- and tool-supporting structure of the basic housing body (2) comprises the tool-holding device (7) on the outside of the first housing side (3) and comprises a motor-holding device (10) for holding the drive motor (6) on the inside of said first housing side.

7. Hand-guided treatment device according to any of Claims 1 to 6, further **characterized in that** the rigid motor- and tool-supporting structure of the basic housing body (2) extends in the form of a plate on the first housing side (3) and extends in such a way as to form a hollow body structure (11) on the second housing side (8).

8. Hand-guided treatment device according to Claim 7, further **characterized in that** the hollow body structure (11) forms a liquid container (12).

9. Hand-guided treatment device according to any of Claims 1 to 8, further **characterized in that** the basic housing body (2) is formed from a metal material, and the remaining housing body (4) is formed from a plastics material.

10. Hand-guided treatment device according to any of Claims 1 to 9, further **characterized in that** it is configured as a power saw or as a cut-off grinder or as hedging shears.

## Revendications

1. Appareil de travail manuel, notamment appareil de jardinage ou de sylviculture, avec
- un carter de moteur (1), qui comprend un corps de base de carter (2), qui s'étend au moins sur un premier côté de carter (3), et un corps résiduel de carter (4) relié au corps de base de carter (2), qui entoure un espace intérieur de carter (5) conjointement avec le corps de base de carter (2), et
- un moteur d'entraînement (6) maintenu sur le corps de base de carter (2) dans l'espace intérieur de carter (5),
- le corps de base de carter (2) présentant un dispositif de maintien d'outil (7) pour maintenir un outil de travail entraîné par le moteur d'entraînement (6),
- le corps de base de carter (2) formant une structure rigide de support de moteur et d'outil qui s'étend au moins sur le premier côté de carter (3) et sur un deuxième côté de carter adjacent (8) en formant une forme en L, **caractérisé en ce que**
- le corps résiduel de carter (4) forme une structure résiduelle de carter non rigide.

2. Appareil de travail manuel selon la revendication 1, en outre **caractérisé en ce que** le corps résiduel de carter (3) et le corps de base de carter (2) se distinguent par leur module d'élasticité d'au moins un facteur de deux, notamment d'au moins un facteur de dix.

3. Appareil de travail manuel selon la revendication 1 ou 2, dans lequel le premier côté de carter (3) forme un côté longitudinal de carter et le deuxième côté de carter (8) forme un côté transversal de carter, et la structure rigide de support de moteur et d'outil du corps de base de carter (2) s'étend sur le premier côté de carter (3) et sur le deuxième côté de carter (8) respectivement sur plus de la moitié de la longueur de distance entre un côté avant d'appareil (GV) et un côté arrière d'appareil (GH) .

4. Appareil de travail manuel selon la revendication 3, en outre **caractérisé en ce que** la structure rigide de support de moteur et d'outil du corps de base de carter (2) s'étend sur le premier côté de carter (3) depuis le côté avant d'appareil (GV) jusqu'au côté arrière d'appareil (GH) .

5. Appareil de travail manuel selon la revendication 4, en outre **caractérisé en ce que** la structure rigide de support de moteur et d'outil du corps de base de carter (2) s'étend en outre sur un troisième côté de carter (9), adjacent au premier côté de carter (3), en formant une forme en U.

6. Appareil de travail manuel selon l'une quelconque des revendications 1 à 5, en outre **caractérisé en ce que** la structure rigide de support de moteur et d'outil du corps de base de carter (2) présente, sur le premier côté de carter (3), du côté extérieur, le dispositif de maintien d'outil (7) et, du côté intérieur, un dispositif de maintien de moteur (10) pour maintenir le moteur d'entraînement (6).

7. Appareil de travail manuel selon l'une quelconque des revendications 1 à 6, en outre **caractérisé en ce que** la structure rigide de support de moteur et d'outil du corps de base de carter (2) s'étend en forme de plaque sur le premier côté de carter (3) et sur le deuxième côté de carter (8) en formant une structure de corps creux (11) .

8. Appareil de travail manuel selon la revendication 7, en outre **caractérisé en ce que** la structure de corps creux (11) forme un réservoir de liquide (12).

9. Appareil de travail manuel selon l'une quelconque des revendications 1 à 8, en outre **caractérisé en ce que** le corps de base de carter (2) est formé d'un matériau métallique et le corps résiduel de carter (4) est formé d'un matériau plastique.

10. Appareil de travail manuel selon l'une quelconque des revendications 1 à 9, en outre **caractérisé en ce qu'**il est configuré sous la forme d'une tronçonneuse ou sous la forme d'une découpeuse à disque ou sous la forme d'un taille-haie.
